(19) Europäisches Patentamt / European Patent Office / Office européen des brevets

(11) **EP 4 036 632 A1**

(12) **EUROPEAN PATENT APPLICATION**
published in accordance with Art. 153(4) EPC

(43) Date of publication:
**03.08.2022 Bulletin 2022/31**

(21) Application number: **20867731.0**

(22) Date of filing: **28.09.2020**

(51) International Patent Classification (IPC):
***G02C 7/00*** *(2006.01)* ***G02B 1/115*** *(2015.01)*
***G02B 1/18*** *(2015.01)*

(52) Cooperative Patent Classification (CPC):
**G02B 1/11; G02B 1/115; G02B 1/18; G02C 7/00; G02C 7/02**

(86) International application number:
**PCT/JP2020/036557**

(87) International publication number:
**WO 2021/060554 (01.04.2021 Gazette 2021/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.09.2019 JP 2019178134**

(71) Applicant: **Hoya Lens Thailand Ltd.**
**Pathumthani 12130 (TH)**

(72) Inventor: **NOMURA, Takumi**
**Tokyo 160-8347 (JP)**

(74) Representative: **Beckmann, Claus**
**Kraus & Weisert**
**Patentanwälte PartGmbB**
**Thomas-Wimmer-Ring 15**
**80539 München (DE)**

(54) **SPECTACLE LENS AND METHOD FOR MANUFACTURING SPECTACLE LENS**

(57) Provided are a spectacle lens having a coating film containing an antibacterial material and a water-repellent material on a surface of a lens substrate, and a method for manufacturing the spectacle lens.

Fig. 1

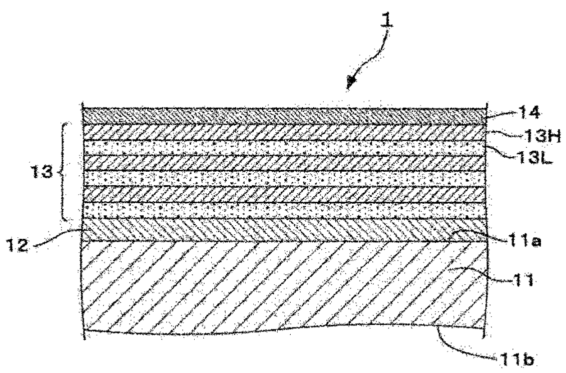


EP 4 036 632 A1

## Description

[Technical Field]

The present invention relates to a spectacle lens that has antibacterial and water-repellent properties on a lens surface and a method for manufacturing the same.

[Background Art]

Lenses such as spectacle lenses generally have various films (layers) that cover a surface of a lens substrate (see PTL 1 to 4).

[Citation List]

[Patent Literature]

[PTL 1] Japanese Patent Application Publication No. H9-327622
[PTL 2] Japanese Patent Application Publication No. 2010-101918
[PTL 3] Japanese Patent Application Publication No. 2010-139964
[PTL 4] Japanese Patent Application Publication No. 2018-159860

Examples of a film that covers a surface of a lens substrate include a hard coat film for preventing scratches on a lens substrate, an antireflection film for preventing light reflection on a lens surface, a water-repellent film for preventing a water mark on a lens, an anti-fog film for preventing fogging of a lens, and like. Further, a spectacle lens that is caused to have antibacterial properties on a lens surface and is particularly suitable for a user who works in a clean environment such as a medical site, and a spectacle lens that is caused to have antistatic properties on a lens surface so that adhesion of dust can be prevented are also known.

PTL 1 discloses an antibacterial surface coating agent containing a zeolite which is ion-substituted with silver ions while having a specific polymerizable compound as a main component.

PTL 2 discloses spectacles that are provided with fine particles of tungsten oxide or a composite material of tungsten oxide on a lens surface and have excellent anti-fog properties and photocatalytic properties such as antibacterial and sterilizing properties.

PTL 3 discloses an optical part in which an antireflection film is provided on a surface of an optical part such as a spectacle lens and a bactericidal substance such as N-(trimethoxypropyl)isothiouronium chloride is applied on the antireflection film.

PTL 4 discloses an optical product (a camera, a spectacle, or the like) in which a dielectric multilayer film including a low refractive index dielectric layer and a high refractive index dielectric layer is provided on a surface of a base material of a lens or the like, and a dielectric layer containing a metal ion-supporting zeolite (an antibacterial material) is disposed on an outermost layer of the dielectric multilayer film, and which provides antibacterial properties while having an optical function such as antireflection.

[Summary of Invention]

[Technical Problem]

As mentioned above, conventionally, there are lenses with antibacterial properties, but in order to for the antibacterial properties to be exhibited, it is necessary to increase a film thickness of a layer containing an antibacterial material to, for example, about 50 nm to 100 nm. In this case, if this is applied on an antireflection film of a spectacle lens, interference fringes are generated and optical characteristics are deteriorated, and thus a new antireflection film design is required, and it cannot be applied on an antireflection film of an existing design. PTL 4 describes that a dielectric multilayer film containing an antibacterial material has an optical function such as antireflection, but a film design of the dielectric multilayer film becomes considerably complicated.

Also, general spectacle lenses have a water-repellent film on an outermost lens surface, but in a case in which not only water-repellent properties but also antibacterial properties are imparted at the same time, it is necessary to additionally provide a layer containing the above-mentioned conventional antibacterial material on the lens surface. However, when each of these films is formed on the lens surface in order to obtain both of antibacterial and water-repellent properties, the water-repellent properties may not be obtained in a case in which the outermost lens surface is an antibacterial film. Further, in a case in which the outermost lens surface is made of a water-repellent film, sufficient antibacterial properties cannot be obtained. That is, in conventional techniques, it has been difficult to obtain both of antibacterial and water-repellent properties.

An object of one aspect of the present invention is to provide a spectacle lens in which both of excellent antibacterial properties and water-repellent properties of a lens surface can be obtained, and a method for manufacturing the same.

[Solution to Problem]

As a result of diligent studies, the present inventors have found that it becomes possible to provide a spectacle lens in which, by imparting antibacterial properties to a water-repellent film generally provided on the outermost lens surface to form a surface having both of water-repellent and antibacterial properties, both of excellent antibacterial and water-repellent properties of the lens surface can be obtained.

One aspect of the present invention relates to a spectacle lens including a coating film containing an antibacterial material and a water-repellent material on a surface of a lens substrate.

Also, one aspect of the present invention relates to a method for manufacturing a spectacle lens including forming a coating film containing an antibacterial material and a water-repellent material on a surface of a lens substrate using a vapor deposition method.

[Advantageous Effects of Invention]

According to the spectacle lens of one aspect of the present invention, by including the coating film containing the antibacterial material and the water-repellent material on the surface of the lens substrate, both of excellent antibacterial and water-repellent properties of a lens surface can be obtained. Also, since such high antibacterial and water-repellent properties can be obtained with the same film (the above coating film), antireflection properties of an antireflection film is not affected even in a case in which the antireflection film is provided under the coating film, and for that reason, it can be easily applied on the antireflection film of an existing design. That is, it is possible to impart both of excellent antibacterial and water-repellent properties to the lens surface while the antireflection properties of an existing product is maintained.

Further, the method for manufacturing a spectacle lens according to one aspect of the present invention is suitable for manufacturing the above-mentioned spectacle lens.

[Brief Description of Drawings]

[Fig. 1]
Fig. 1 is a cross-sectional view of one embodiment of a spectacle lens according to one aspect of the present invention.
[Fig. 2]
Fig. 2 is a schematic diagram for explaining a coating film forming method using a vapor deposition method.

[Description of Embodiments]

Embodiments for implementing the present invention will be described below with reference to the drawings. However, the present invention is not limited to the forms shown in the drawings.

Fig. 1 is a cross-sectional view of one embodiment of a spectacle lens according to one aspect of the present invention.

<Configuration of spectacle lens>

A spectacle lens 1 of the present embodiment is a spectacle lens in which a hard coat film for protecting a lens surface from scratches or the like, an antireflection film for preventing light reflection on the lens surface, and the like are formed on a spectacle lens substrate.

Specifically explaining with reference to Fig. 1, the spectacle lens 1 of the present embodiment has a hard coat film 12 on one surface 11a (for example, a surface on an object side) of a lens substrate 11, and an antireflection film 13 on the hard coat film 12. The antireflection film 13 is a film in which a low refractive index layer 13L and a high refractive index layer 13H are alternately laminated. Also, in the present embodiment, the antireflection film 13 has a

coating film 14 containing an antibacterial material and a water-repellent material. Details of a configuration of the coating film 14 will be described later.

The lens substrate 11, the hard coat 12, and the antireflection film 13 will be described below in order.

<Lens substrate>

The lens substrate 11 in the present embodiment has a first main surface (an object side surface), a second main surface (an eyeball side surface), and an edge surface (edge portion).

A material of the lens substrate 11 may be plastic or inorganic glass. For example, as the lens substrate 11, various plastic base materials usually used for plastic lenses can be used. A plastic lens substrate can be manufactured by injecting a lens monomer into a lens forming mold and performing a curing treatment.

The lens monomer is not particularly limited, and various monomers usually used for manufacturing plastic lenses can be used. For example, a monomer having a benzene ring, a naphthalene ring, an ester bond, a carbonate bond, a urethane bond, or the like in a molecule can be used. Further, a compound containing sulfur and halogen elements can also be used, and in particular, a compound having a nuclear halogen-substituted aromatic ring can also be used. The lens monomer can be produced by using one kind or two or more kinds of monomers having the above functional groups. For example, styrene, divinylbenzene, phenyl (meth)acrylate, benzyl(meth)acrylate, naphthyl (meth)acrylate, methyl (meth)acrylate, diethylene glycol bisallyl carbonate, diallyl (iso)phthalate, dibenzyl itaconate, dibenzyl fumarate, chlorostyrene, nuclear halogen-substituted styrene, nuclear halogen-substituted phenyl (meth)acrylate, nuclear halogen-substituted benzyl (meth)acrylate, tetrabromobisphenol A (di)(meth)acrylate derivatives, tetrabromobisphenol A diallyl carbonate derivatives, diortho chloro benzyl itaconate, diortho chloro benzyl fumarate, diethylene glycol bis(ortho chloro benzyl) fumarate, (di)ethylene glycol di(meth)acrylate, glycidyl methacrylate, xylylene diisocyanate, reaction products of polyfunctional isocyanates such as hexamethylene diisocyanate, reaction products of monohydroxyacrylates of nuclear halogen-substituted phenol derivatives and polyfunctional isocyanates, reaction products of monohydroxyacrylate and polyfunctional isocyanate of nuclear halogen-substituted biphenyl derivatives, reaction products of xylene diisocyanate and polyfunctional mercaptan, reaction products of glycidyl methacrylate and polyfunctional methacrylate, etc., and mixtures thereof can be mentioned. As a material of the lens substrate, for example, polyurethane-based materials such as polythiourethane resin and polyurethane resin, epithio-based materials such as polysulfide resin, polycarbonate-based materials, diethylene glycol bisallyl carbonate-based materials, or the like can be mentioned as being suitable.

For the lens substrate 11, a colorless material is usually used, but a colored one can be used as long as transparency is not impaired.

A refractive index of the lens substrate 11 is, for example, 1.50 or more and 1.74 or less.

The lens substrate 11 may be either a finished lens or a semi-finish lens.

A surface shape of the lens substrate 11 is not particularly limited and may be a flat surface, a convex surface, a concave surface, or the like.

The spectacle lens 1 of the present embodiment may be any of a single focus lens, a multifocal lens, a progressive power lens, and the like. In the progressive power lens, usually, a near part region (a near part) and a progressive part region (an intermediate region) are included in a lower region, and a distance part region (a distance part) is included in an upper region.

<Hard coat film>

The hard coat film 12 can impart scratch resistance to the plastic lens.

A method for applying a curable composition to a surface of the lens substrate 11 using a spin coating method or the like to cure a coating film is a general method for forming the hard coat film 12. The curing treatment is performed by heating, light irradiation, or the like, depending on a type of the curable composition.

For such a curable composition, for example, a photocurable silicone composition containing a silicone compound that produces a silanol group upon irradiation with ultraviolet rays and an organopolysiloxane having a halogen atom that undergoes a condensation reaction with a silanol group or a reactive group such as an amino group as main components, an acrylic UV curable monomer composition, an inorganic fine particle-containing thermosetting composition in which inorganic fine particles such as $SiO_2$ and $TiO_2$ are dispersed in a silane compound or a silane coupling agent having a polymerizable group such as a vinyl group, an allyl group, an acrylic group or a methacrylic group and a hydrolyzable group such as a methoxy group, and the like can be mentioned as being suitable. A composition of the hard coat film 12 is selected in accordance with the material of the lens substrate 11. In addition, a refractive index of the hard coat film 12 is, for example, 1.45 or more and 1.74 or less.

<Antireflection film>

The antireflection film 13 usually has a multilayer structure in which layers having different refractive indexes are laminated and is a film that prevents light reflection caused by an interference action. Examples of a material of the antireflection film 13 include inorganic substances such as $SiO_2$, SiO, $ZrO_2$, $TiO_2$, TiO, $Ti_2O_3$, $Ti_2O_5$, $Nb_2O_5$, $Al_2O_3$, $Ta_2O_5$, $CeO_2$, MgO, $Y_2O_3$, $SnO_2$, $MgF_2$, and $WO_3$, and these can be used alone or in combination of two or more.

An example of such an antireflection film 13 is a multilayer structure in which the low refractive index layer 13L and the high refractive index layer 13H are laminated in multiple layers. A refractive index of the low refractive index layer 13L is, for example, 1.35 to 1.80 at a wavelength of 500 to 550 nm. A refractive index of the high refractive index layer 13H is, for example, 1.90 to 2.60 at a wavelength of 500 to 550 nm.

The low refractive index layer 13L is made of, for example, silicon dioxide ($SiO_2$) having a refractive index of about 1.43 to 1.47. Further, the high refractive index layer 13H is made of a material having a higher refractive index than the low refractive index layer 13L and is composed of, for example, a metal oxide such as niobium oxide ($Nb_2O_5$), tantalum pentoxide ($Ta_2O_5$), zirconium oxide ($ZrO_2$), yttrium oxide ($Y_2O_3$), and aluminum oxide ($Al_2O_3$) in an appropriate ratio.

In a case in which the material of the antireflection film 13 is an inorganic substance such as a metal oxide as described above, as a film forming method thereof, for example, a vacuum vapor deposition, an ion plating method, a sputtering method, a CVD method, a method of depositing using a chemical reaction in a saturated solution, or the like can be adopted.

Next, the coating film containing the antibacterial material and the water-repellent material will be described in detail.

As described above, the spectacle lens 1 of the present embodiment has the coating film 14 containing the antibacterial material and the water-repellent material on the surface (for example, the outermost surface) of the lens substrate 11.

For the antibacterial material, for example, silver (Ag) particles are preferably used. Silver particles exhibit good antibacterial properties in, for example, ultraviolet light and visible light regions, and, by having the coating film 14 containing silver particles on the surface of the lens substrate 11, it is possible to impart excellent antibacterial properties to the lens surface.

In a case in which the coating film 14 is formed by the vapor deposition method, which will be described later, a solid content weight of the silver particles on a sintered filter (chip), which will be described later, is preferably 0.85 mg (an injection amount of a silver particle aqueous dispersion (a concentration of 5,000 ppm) of 0.05 ml, which will be described later) or more, and particularly preferably 1.45 mg (an injection amount of a silver particle aqueous dispersion (a concentration of 5,000 ppm) of 0.1 ml, which will be described later) or more. In addition, an upper limit of the solid content weight of the silver particles is not particularly limited, but is, for example, 17.2 mg (an injection amount of a silver particle aqueous dispersion (a concentration of 5,000 ppm) of 1.0 ml, which will be described later) or less. Here, the unit ppm is based on weight.

The silver particles are preferably particles having a particle size smaller than a film thickness of the coating film 14. If particles having a particle size larger than the film thickness of the coating film 14 are included, protrusions may be formed on a surface of the coating film 14 and optical properties of the lens surface may be deteriorated.

As described above, the silver particles preferably have a particle size smaller than that of the coating film 14. Considering the case in which the film thickness of the coating film 14 is 5 nm or more and 30 nm or less as described later, the silver particles preferably have a particle size of 1 nm or more and 10 nm or less, and particularly preferably have 1 nm or more and 5 nm or less.

Further, since such silver particles having a particle size of nanometer size can be melted at a low temperature, they are suitable for forming the coating film 14 containing the antibacterial material and the water-repellent material using a vapor deposition method as described later.

Further, as the water-repellent material, any substance that can make the surface of the coating film 14 a water-repellent region can be used without particular limitation. For the water-repellent material, for example, a fluorine-based substance can be preferably used. For such a fluorine-based substance, for example, metaxylene hexafluoride ($C_6H_4(CF_3)_2$) or the like can be used.

Further, for the fluorine-based substance, for example, a fluorine-containing silane compound represented by the following general formula (1) can be used.

[C1]

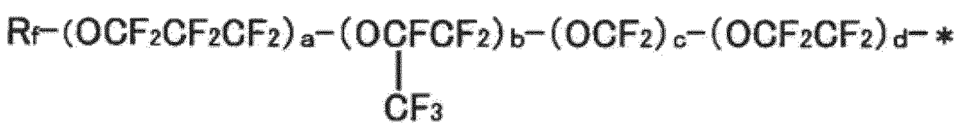

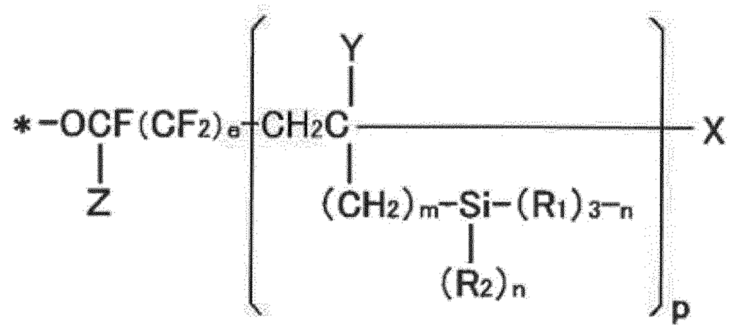

・・・(1)

Rf in the general formula (1) is a linear or branched perfluoroalkyl group having 1 to 16 carbon atoms and is preferably $CF_3$-, $C_2F_5$-, and $C_3F_7$-. $R_1$ is a hydrolyzable group, and for example, halogen atoms, $-OR_3$, $-OCOR_3$, $-OC(R_3)=C(R_4)_2$, $-ON=C(R_3)_2$, or $-ON=CR_5$ are preferable. More preferably, it is a chlorine atom, $-OCH_3$, or $-OC_2H_5$. Here, $R_3$ is an aliphatic hydrocarbon group or an aromatic hydrocarbon group, $R_4$ is a hydrogen atom or a lower aliphatic hydrocarbon group, and $R_5$ is a divalent aliphatic hydrocarbon group having 3 to 6 carbon atoms. $R_2$ is a hydrogen atom or a monovalent organic group. The monovalent organic group is preferably an inert group. The monovalent organic group is more preferably a monovalent hydrocarbon group having 1 to 4 carbon atoms. X is an iodine atom or a hydrogen atom, and Y is a hydrogen atom or a lower alkyl group. Z is a fluorine atom or a trifluoromethyl group. Symbols a, b, c, and d are independently integers in the range of 0 to 200, and are preferably integers in the range of 1 to 50. Symbol e is 0 or 1. Symbols m and n are independently integers in the range of 0 to 2, and are preferably 0. Symbol p is an integer of 1 or more, and preferably an integer in the range of 1 to 10.

Also, a molecular weight (a weight average molecular weight Mw) of the above compound is not particularly limited, and for example, $5\times10^2$ to $1\times10^5$ is preferable, and $5\times10^2$ to $1\times10^4$ is particularly preferable.

Further, as a particularly preferable compound of the fluorine-containing silane compound represented by the above general formula (1), a compound represented by the following general formula (2) can be mentioned.

[C2]

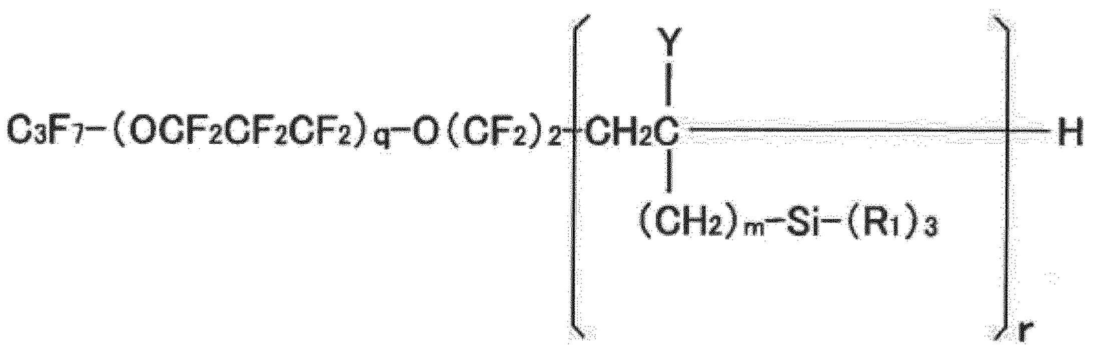

・・・(2)

$R_1$, Y, and m in the general formula (2) are synonymous with the general formula (1). Symbol q is an integer in the range of 1 to 50, and r is an integer in the range of 1 to 10.

Also, since the water-repellent material can be used without particular limitation as long as it is a substance that makes the surface of the coating film 14 a water-repellent region, it is not limited to the above-exemplified substance.

It is desirable that the film thickness of the coating film 14 containing the antibacterial material (for example, silver particles) and the water-repellent material (for example, a fluorine-based substance) be as thin as possible so that deterioration of the optical characteristics of the lens surface (occurrence of interference fringes, etc.) can be inhibited. From such a viewpoint, the film thickness of the coating film 14 is preferably in the range of 5 nm or more and 30 nm or less. Particularly, it is preferably in the range of 10 nm or more and 15 nm or less. In the spectacle lens, both of excellent antibacterial and water-repellent properties can be obtained even when the coating film 14 containing the antibacterial material and the water-repellent material is, for example, a thin film having a film thickness of 30 nm or less.

In the spectacle lens 1 of the present embodiment, the surface of the coating film 14 on a side opposite to the

lens substrate 11 side has a contact angle with water of, for example, 100° or more and 120° or less, and the lens surface can have good water-repellent properties.

Further, as shown in Fig. 1, the spectacle lens 1 of the present embodiment has the antireflection film 13 below the coating film 14. According to the present embodiment, since the film thickness of the coating film 14 that imparts the antibacterial properties and the water-repellent properties on the lens surface can be reduced to, for example, 30 nm or less, it is possible to inhibit an influence on the antireflection properties of the antireflection film 13. For that reason, it can be easily applied on the antireflection film of an existing design.

Also, in the embodiment of Fig. 1, an aspect in which the coating film 14 is provided on one surface 11a (for example, the surface on the object side) of the lens substrate 11 is illustrated. The spectacle lens according to one aspect of the present invention is not limited thereto, and an aspect having the coating film 14 not only on the first main surface (object side surface) of the lens substrate 11, but also on the other second main surface (eyeball side surface) is also preferable.

As described above, according to the spectacle lens 1 of the present embodiment, by having the coating film 14 containing the antibacterial material and the water-repellent material on the surface of the lens substrate 11, both of excellent antibacterial and water-repellent properties of the lens surface can be obtained. In addition, such high antibacterial and water-repellent properties can be obtained with the same film (the above coating film 14). Further, even in a case in which the antireflection film 13 is provided below the coating film 14, it is possible not to influence the antireflection properties of the antireflection film 13, and for that reason, it can be easily applied on the antireflection film of the existing design. That is, it is possible to impart both of excellent antibacterial and water-repellent properties to the lens surface while maintaining the antireflection properties of an existing product.

Next, a method for manufacturing the spectacle lens 1 of the present embodiment described above will be described. According to one aspect of the present invention, a method for manufacturing a spectacle lens suitable for manufacturing the spectacle lens is provided. The method for manufacturing a spectacle lens according to one aspect of the present invention includes forming a coating film containing an antibacterial material and a water-repellent material on a surface of a lens substrate using a vapor deposition method.

As shown in Fig. 1 described above, the spectacle lens 1 of the present embodiment has the hard coat film 12 on one surface 11a of the lens substrate 11, the antireflection film 13 on the hard coat film 12, and the coating film 14 containing an antibacterial material and a water-repellent material on the antireflection film 13. The film forming method of the hard coat film 12 and the antireflection film 13 has already been described.

A method for forming the coating film 14 will be described below.

In order to manufacture the spectacle lens according to one aspect of the present invention, the method for forming the coating film 14 containing the antibacterial material and the water-repellent material using a vapor deposition method can be preferably applied.

Fig. 2 is a schematic diagram for explaining a coating film forming method using a vapor deposition method. Also, in Fig. 2, illustration of the hard coat film 12 and the antireflection film 13 is omitted.

In a vacuum chamber (not shown), for example, a sintered filter 2, into which the antibacterial material and the water-repellent material are injected and which is placed on a molybdenum boat (not shown), is heated by a heating means 3 to simultaneously heat and evaporate the antibacterial material and the water-repellent material to cause them to adhere to the surface of the lens substrate 11, thereby forming the coating film 14 containing the antibacterial material and the water-repellent material.

The sintered filter 2 into which the antibacterial material and the water-repellent material are injected is prepared as follows, for example.

A water dispersion containing the antibacterial material (preferably silver particles) and a coating liquid containing the water-repellent material (preferably a fluorine-based substance) are injected into the sintered filter 2 and dried, for example, at 50°C for 1 hour to leave solid contents of the antibacterial material and the water-repellent material in the sintered filter 2.

For the heating means 3, for example, a halogen heater or the like can be used.

In a case in which silver particles are used as the antibacterial material and, for example, a fluorine-based substance is used for the water-repellent material, it is assumed that the coating film 14 that has adhered to and has been formed on the surface of the lens substrate 11 using the above vapor deposition method has silver particles serving as the antibacterial material present in the coating film (a water-repellent film made of the water-repellent material).

A pressure in the vacuum chamber at the time of film formation varies depending on types of the antibacterial material and the water-repellent material used and, although it cannot be said unconditionally, it is preferably $2\times10^{-2}$ Pa or less, for example.

In addition, a heating temperature at the time of film formation varies depending on types of the antibacterial material and the water-repellent material used and, although it cannot be said unconditionally, it is preferable to appropriately adjust the temperature in the range of, for example, 100°C or higher and 750°C or lower. Here, the heating temperature at the time of film formation is an internal atmospheric temperature of a device for performing the film

formation and can be, for example, the internal atmospheric temperature of the vacuum chamber.

Further, it is possible to adjust a film thickness of the formed coating film 14 by appropriately adjusting a film forming time.

As described above, the coating film 14 containing the antibacterial material and the water-repellent material is formed on the lens surface, and the spectacle lens 1 of the present embodiment is completed.

As described above, the method for manufacturing a spectacle lens according to one aspect of the present invention is suitable for manufacturing the above-mentioned spectacle lens according to one aspect of the present invention.

[Examples]

The present invention will be described in more detail below with reference to examples. However, the present invention is not limited to the embodiments shown in the examples.

(Example 1)

A hard coat liquid containing inorganic oxide particles and a silicon compound was applied to the entire surface (a convex surface) of one surface of a spectacle lens substrate manufactured by a monomer for spectacle lenses (a trade name "MR8" manufactured by Mitsui Chemicals, Inc.) by spin coating and cured by heating at 100°C for 60 minutes, thereby forming a single-layer hard coat film with a thickness of 3 $\mu$m.

Next, the spectacle lens on which the hard coat film was formed was placed in a vapor deposition device, and an antireflection film in which $SiO_2$-$ZrO_2$-$SiO_2$ layers were alternately laminated was formed on the entire surface of the hard coat film using a vacuum vapor deposition method.

<Preparation of antibacterial material-containing liquid and water-repellent material-containing liquid>

As an antibacterial material-containing liquid, an aqueous dispersion (a concentration (content) of 5,000 ppm) of silver particles (a particle size of 5 nm) was prepared.

Further, as a water-repellent material-containing liquid, a coating liquid containing metaxylene hexafluoride as the fluorine-based substance was prepared.

<Formation of coating film>

0.5 ml of a silver particle aqueous dispersion was injected into a surface of a disk-shaped sintered filter (material: SUS) having a diameter of φ18 mm and dried in a drying oven at 50°C for 1 hour. An Ag solid content weight after drying was 0.0077 g. Next, similarly, 0.25 ml of a coating liquid containing the above-mentioned fluorine-containing silane compound was injected onto the surface of the sintered filter and dried in a drying oven at 50°C for 1 hour.

As shown in Fig. 2 described above, in a vacuum chamber, the sintered filter into which the antibacterial material and the water-repellent material prepared as described above were injected was placed on a molybdenum boat and heated by a heating means. A halogen heater was used for the heating means. A heating temperature at the time of film formation was adjusted to 650°C. Also, a pressure in the vacuum chamber at the time of film formation was $2 \times 10^{-2}$ Pa or less.

Thus, the antibacterial material and the water-repellent material were heated at the same time, evaporated, and caused to adhere to the surface of the spectacle lens, thereby forming a coating film having a film thickness of 15 nm containing the antibacterial material and the water-repellent material. Further, a film thickness of the formed coating film was adjusted by appropriately adjusting a film forming time.

As described above, the coating film containing the antibacterial material and the water-repellent material was formed on the lens surface, and the spectacle lens of Example 1 was produced.

(Example 2)

A coating film having a film thickness of 15 nm was formed on a surface of a spectacle lens in the same manner as in Example 1 except that an amount of the aqueous dispersion of silver particles injected into the sintered filter was 1.0 ml, and thus a spectacle lens of Example 2 was produced.

(Example 3)

A coating film having a film thickness of 15 nm was formed on a surface of a spectacle lens in the same manner

as in Example 1 except that an injection amount of the aqueous dispersion of silver particles into the sintered filter was 0.1 ml, and thus a spectacle lens of Example 3 was produced.

(Example 4)

A coating film having a film thickness of 15 nm was formed on a surface of a spectacle lens in the same manner as in Example 1 except that an amount of the aqueous dispersion of silver particles injected into the sintered filter was 0.05 ml, and thus a spectacle lens of Example 4 was produced.

(Example 5)

A coating film having a film thickness of 15 nm was formed on a surface of a spectacle lens in the same manner as in Example 1 except that the silver particles used as the antibacterial material had a particle size of 3 nm, and thus a spectacle lens of Example 5 was produced.

(Example 6)

A coating film having a film thickness of 15 nm was formed on a surface of a spectacle lens in the same manner as in Example 1 except that the silver particles used as the antibacterial material had a particle size of 8 nm, and thus a spectacle lens of Example 6 was produced.

(Example 7)

A spectacle lens of Example 7 was produced in the same manner as in Example 1 except that the film thickness of the coating film formed on the surface of the spectacle lens was 30 nm.

(Example 8)

A spectacle lens of Example 8 was produced in the same manner as in Example 1 except that the film thickness of the coating film formed on the surface of the spectacle lens was 10 nm.

(Example 9)

A spectacle lens of Example 9 was produced in the same manner as in Example 1 except that the film thickness of the coating film formed on the surface of the spectacle lens was 5 nm.

The following evaluation tests were performed on each of the spectacle lenses of Examples 1 to 9 obtained as described above. The results are summarized and shown in Table 1 below.

[Antibacterial properties]

Antibacterial properties was evaluated in accordance with JIS Z 2801: 2012. Also, a spectacle lens in which the above coating film was not formed on the lens surface was used as a reference sample.

After 50 mm×50 mm test pieces (the spectacle lenses of each of the above examples and the above reference sample) were placed in a sterilized petri dish, 0.4 mL of a bacterial solution containing $1.0\times10^5$ to $4.0\times10^5$ test bacteria (Staphylococcus aureus or Escherichia coli) was dropped onto a center of each sample and covered with a polyethylene film cut into 40 mm×40 mm. After this petri dish was cultured at a relative humidity of 90% or more for 24 hours, a viable cell count per 1 $cm^2$ was measured, and the following antibacterial activity values were calculated.

$$\text{Antibacterial activity value} = Ut - At \geq 2.0$$

Ut: Average value of logarithmic number of viable cells per 1 $cm^2$ after 24-hour culture of unprocessed test piece (reference sample)

At: Average value of logarithmic number of viable cells per 1 $cm^2$ after 24-hour culture of antibacterial processed test piece (example sample)

The criteria for determining the antibacterial properties are as follows.

◎: Antibacterial activity value is 4.0 or more

◦: Antibacterial activity value is 2.5 or more and less than 4.0

Δ: Antibacterial activity value is 2.0 or more and less than 2.5

×: Antibacterial activity value is less than 2.0

[Water-repellent properties]

A contact angle of a surface of the coating film (a surface opposite to the lens substrate side) with respect to water was measured, and the water-repellent properties of the lens surface was evaluated.
The criteria for determining the water-repellent properties are as follows.

◦: Contact angle with water is 100° or more and 120° or less
Δ: Contact angle with water is 95° or more and less than 100°
×: Contact angle with water is less than 95°

[Table 1]

| Table 1 | Ag particle size (nm) | Injection amount of Ag dispersion (ml) | Film thickness of coating film (nm) | Antibacte rial property (Staphylococcus) | Antibacte rial property (Escherichiacoli) | Water-repellent property |
|---|---|---|---|---|---|---|
| Example 1 | 5 | 0.5 | 15 | ◎ | ◎ | ◦ |
| Example 2 | 5 | 1.0 | 15 | ◎ | ◎ | ◦ |
| Example 3 | 5 | 0.1 | 15 | ◎ | ◎ | ◦ |
| Example 4 | 5 | 0.05 | 15 | ◎ | Δ | ◦ |
| Example 5 | 3 | 0.5 | 15 | ◎ | ◎ | ◦ |
| Example 6 | 8 | 0.5 | 15 | ◎ | ◦ | ◦ |
| Example 7 | 5 | 0.5 | 30 | ◎ | ◎ | ◦ |
| Example 8 | 5 | 0.5 | 10 | ◎ | ◎ | ◦ |
| Example 9 | 5 | 0.5 | 5 | ◦ | Δ | ◦ |

In addition, the following durability evaluations were performed on each of the spectacle lenses of Examples 1 to 9 newly produced in exactly the same manner as above, and the results were summarized and shown in Table 2 below.

[Durability evaluation]

After the surface of the coating film of each spectacle lens was rubbed with a lens-cleaning paper (Dusper K3 (trade name) manufactured by Ozu Corporation) reciprocating 600 times with a load of 2 kg, the evaluation tests of the antibacterial properties and the water-repellent properties were performed. A test method and determination criteria are the same as above. In addition, this lens-cleaning paper is generally used as a cleaning paper for optical lenses and the like.

[Table 2]

| Table 2 | Antibacterial property (Staphylococcus) | Antibacterial property (Escherichiacoli) | Water-repellent property |
|---|---|---|---|
| Example 1 | ◎ | Δ | ◦ |
| Example 2 | ◎ | Δ | ◦ |
| Example 3 | ◎ | Δ | ◦ |
| Example 4 | Δ | Δ~× | ◦ |
| Example 5 | ◎ | Δ | ◦ |
| Example 6 | ◎ | Δ | ◦ |
| Example 7 | ◎ | Δ | ◦ |
| Example 8 | ◎ | Δ | ◦ |
| Example 9 | Δ | Δ~x | Δ |

[Evaluation results]

As can be seen from the results in Table 1 above, all of the spectacle lenses of the examples can obtain both of excellent antibacterial and water-repellent properties on the lens surface. In addition, such high antibacterial and water-repellent properties can be obtained with the same film (the coating film). Further, high antibacterial and water-repellent properties can be obtained even with a thin film having a film thickness of 30 nm or less.

Also, in particular, the film thickness of the coating film is preferably in the range of 10 nm to 30 nm, and more preferably in the range of 10 nm to 15 nm. If an initial film thickness of the coating film is too thin (for example, about 5 nm), the antibacterial properties after wear of the lens surface tends to deteriorate (Table 2).

Finally, the above-described aspects will be summarized.

According to one aspect, a spectacle lens having a coating film containing an antibacterial material and a water-repellent material on a surface of a lens substrate is provided.

In one form, the antibacterial material can be silver particles.

In one form, the silver particles can be particles whose particle size is smaller than a film thickness of the coating film.

In one form, the silver particles can have a particle size of 1 nm or more and 10 nm or less.

In one form, the water-repellent material can be a fluorine-based substance.

In one form, the film thickness of the coating film can be 5 nm or more and 30 nm or less.

In one form, a surface of the coating film on a side opposite to the lens substrate side can have a contact angle with respect to water of 100° or more and 120° or less.

In one form, the spectacle lens can have an antireflection film below the coating film.

According to one aspect, a method for manufacturing a spectacle lens which includes forming a coating film containing an antibacterial material and a water-repellent material on a surface of a lens substrate using a vapor deposition method is provided.

In one form, forming the coating film containing the antibacterial material and the water-repellent material using a vapor deposition method can be simultaneously heating and evaporating the antibacterial material and the water-repellent material to cause them to adhere to the surface of the lens substrate in a vacuum chamber, thereby forming the coating film containing the antibacterial material and the water-repellent material.

In one form, a pressure in the vacuum chamber can be $2\times10^{-2}$ Pa or less.

In one form, a heating temperature can be 100°C or higher and 750°C or lower.

In one form, the antibacterial material can be silver particles.

The various forms described in the present specification can be combined in any combination of two or more.

The embodiments disclosed this time should be considered to be exemplary in all respects and not restrictive. The scope of the present invention is shown by the scope of claims rather than the above description and is intended to include all modifications within the meaning and scope of the claims.

[Reference Signs List]

| | |
|---|---|
| 1 | Spectacle lens |
| 11 | Lens substrate |
| 12 | Hard coat film |
| 13 | Antireflection film |
| 13H | High refractive index layer |
| 13L | Low refractive index layer |
| 14 | Coating film |
| 2 | Sintered filter |
| 3 | Heating means |

## Claims

1. A spectacle lens comprising a coating film containing an antibacterial material and a water-repellent material on a surface of a lens substrate.

2. The spectacle lens according to claim 1, wherein the antibacterial material is silver particles.

3. The spectacle lens according to claim 2, wherein the silver particles are particles whose particle size is smaller than a film thickness of the coating film.

4. The spectacle lens according to claim 2 or 3, wherein the silver particles have a particle size of 1 nm or more and 10 nm or less.

5. The spectacle lens according to any one of claims 1 to 4, wherein the water-repellent material is a fluorine-based substance.

6. The spectacle lens according to any one of claims 1 to 5, wherein the film thickness of the coating film is 5 nm or more and 30 nm or less.

7. The spectacle lens according to any one of claims 1 to 6, wherein a surface of the coating film on a side opposite to the lens substrate side has a contact angle with respect to water of 100° or more and 120° or less.

8. The spectacle lens according to any one of claims 1 to 7, wherein the spectacle lens has an antireflection film below the coating film.

9. A method for manufacturing a spectacle lens, comprising forming a coating film containing an antibacterial material and a water-repellent material on a surface of a lens substrate using a vapor deposition method.

10. The method for manufacturing a spectacle lens according to claim 9,
wherein forming the coating film containing the antibacterial material and the water-repellent material using a vapor deposition method is simultaneously heating and evaporating the antibacterial material and the water-repellent material to cause them to adhere to the surface of the lens substrate in a vacuum chamber, thereby forming the coating film containing the antibacterial material and the water-repellent material.

11. The method for manufacturing a spectacle lens according to claim 10, wherein a pressure in the vacuum chamber is $2 \times 10^{-2}$ Pa or less.

**12.** The method for manufacturing a spectacle lens according to claim 10 or 11, wherein a heating temperature is 100°C or higher and 750°C or lower.

**13.** The method for manufacturing a spectacle lens according to any one of claims 9 to 12, wherein the antibacterial material is silver particles.

Fig. 1

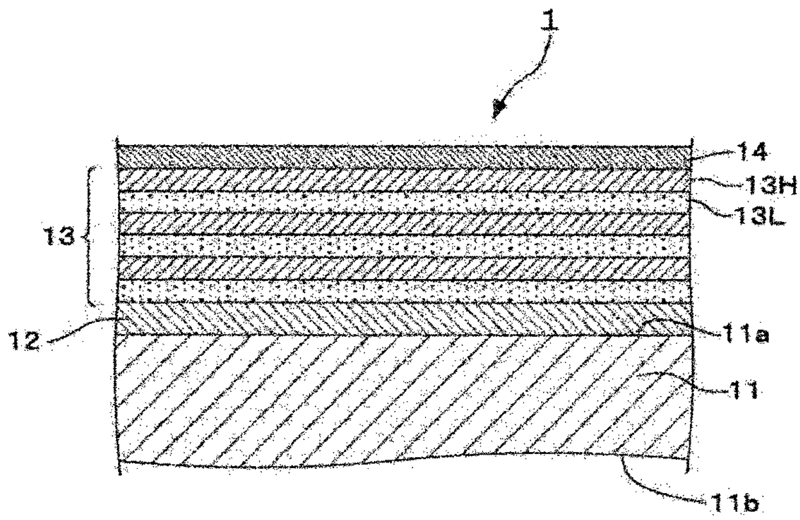

Fig. 2

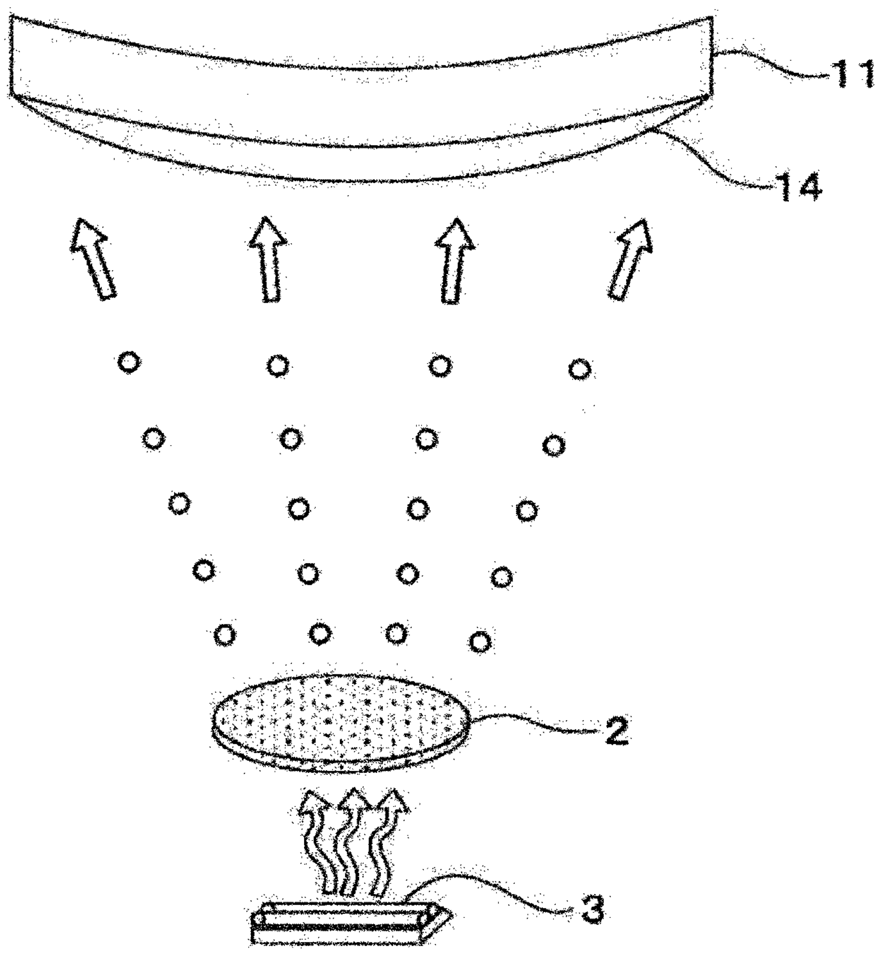

## INTERNATIONAL SEARCH REPORT

International application No.
PCT/JP2020/036557

A. CLASSIFICATION OF SUBJECT MATTER
G02C7/00(2006.01)i; G02B1/115(2015.01)i; G02B1/18(2015.01)i
FI: G02C7/00; G02B1/18; G02B1/115
According to International Patent Classification (IPC) or to both national classification and IPC

B. FIELDS SEARCHED
Minimum documentation searched (classification system followed by classification symbols)
G02C7/00; G02B1/115; G02B1/18

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 10-221504 A (TOTO KIKI KABUSHIKI KAISHA) 21 August 1998 (1998-08-21) claim 1, paragraphs [0006], [0011], example 1 | 1, 5, 7-9, 13<br>2-4, 6, 10-12 |
| X<br>Y | WO 2019/093259 A1 (SUMITOMO CHEMICAL CO., LTD.) 16 May 2019 (2019-05-16) claim 1, paragraphs [0153], [0176], examples | 1, 5, 7-9, 13<br>2-4, 6, 10-12 |
| X<br>Y | JP 2003-277689 A (SUMITOMO CHEMICAL INDUSTRY COMPANY LIMITED) 02 October 2003 (2003-10-02) paragraphs [0019], [0031], examples | 1, 5, 7-9, 13<br>2-4, 6, 10-12 |
| X<br>Y | JP 2012-181255 A (KURARAY CO., LTD.) 20 September 2012 (2012-09-20) paragraph [0054] | 1, 5, 7-9, 13<br>2-4, 6, 10-12 |
| X<br>Y | JP 2012-185348 A (SEIKO EPSON CORP.) 27 September 2012 (2012-09-27) claim 5, paragraph [0042] | 1, 5, 7-9, 13<br>2-4, 6, 10-12 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 December 2020 (08.12.2020) | 15 December 2020 (15.12.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/036557

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | WO 2017/145910 A1 (TOKAI OPTICAL CO., LTD.) 31 August 2017 (2017-08-31) paragraph [0018] | 1, 5, 7-9, 13<br>2-4, 6, 10-12 |
| Y<br><br>A | JP 2016-161819 A (AIRE INC.) 05 September 2016 (2016-09-05) paragraph [0002]<br>paragraph [0004] | 2-4, 6<br><br>1-13 |
| Y | JP 2016-069720 A (YOSHIDA, Kunio) 09 May 2016 (2016-05-09) paragraph [0034] | 10-12 |
| Y | JP 2005-031361 A (KONICA MINOLTA OPTO, INC.) 03 February 2005 (2005-02-03) paragraph [0048] | 10-12 |
| Y | JP 07-063915 A (CANON INC.) 10 March 1995 (1995-03-10) paragraph [0024] | 10-12 |

Form PCT/ISA/210 (continuation of second sheet) (January 2015)

**INTERNATIONAL SEARCH REPORT**

International application No.
PCT/JP2020/036557

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
See extra sheet

1. ☒ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

**INTERNATIONAL SEARCH REPORT**
Information on patent family members

International application No.
PCT/JP2020/036557

| Patent Documents referred in the Report | Publication Date | Patent Family | Publication Date |
|---|---|---|---|
| JP 10-221504 A | 21 Aug. 1998 | (Family: none) | |
| WO 2019/093259 A1 | 16 May 2019 | JP 2019-84827 A<br>TW 201922497 A | |
| JP 2003-277689 A | 02 Oct. 2003 | (Family: none) | |
| JP 2012-181255 A | 20 Sep. 2012 | (Family: none) | |
| JP 2012-185348 A | 27 Sep. 2012 | (Family: none) | |
| WO 2017/145910 A1 | 31 Aug. 2017 | US 2018/0348414 A1<br>paragraph [0055]<br>EP 3407100 A<br>CN 108603952 A<br>KR 10-2018-0114071 A | |
| JP 2016-161819 A | 05 Sep. 2016 | (Family: none) | |
| JP 2016-069720 A | 09 May 2016 | (Family: none) | |
| JP 2005-031361 A | 03 Feb. 2005 | US 2005/0007934 A1<br>paragraph [0142]<br>CN 1576889 A | |
| JP 07-063915 A | 10 Mar. 1995 | US 5715103 A<br>column 4, lines 64-67 | |

Form PCT/ISA/210 (patent family annex) (January 2015)

**INTERNATIONAL SEARCH REPORT**

International application No.
PCT/JP2020/036557

<Continuation of Box No. III>

(Invention 1) Claims 1-8

Document 1 discloses a plastic lens for spectacles comprising a surface layer (corresponding to the "coating film") which contains anatase-type titanium oxide and water-repellent silicone (corresponding to the "water-repellent material") on the surface of a base material (see claim 1, paragraph [0006], example 1, etc.). Since titanium oxide has an antibacterial effect (see paragraph [0004] in document 7, etc.), the anatase-type titanium oxide corresponds to an "antibacterial material". Accordingly, claim 1 lacks novelty in light of document 1, and thus does not have a special technical feature.

Claims 1-8 are classified as invention 1.

(Invention 2) Claims 9-13

Claims 9-13 share, with claim 1 classified as invention 1, the common technical feature in that the claims are inventions pertaining to a spectacle lens which comprises a coating film containing an antibacterial material and a water-repellent material. However, as described for invention 1, said technical feature does not make a contribution over the prior art in light of the disclosure of document 1 and thus cannot be said to be a special technical feature. Moreover, there do not exist other identical or corresponding special technical features between these inventions.

Further, claims 9-13 are not dependent on claim 1. Furthermore, claims 9-13 are not substantially identical or equivalent to any of the claims classified as invention 1.

Therefore, claims 9-13 cannot be classified as invention 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H9327622 B
- JP 2010101918 A
- JP 2010139964 A
- JP 2018159860 A